# FASCICULE DE BREVET EUROPEEN

(11) **EP 4 395 690 B1**
(45) Date de publication et mention de la délivrance du brevet: **06.08.2025**
(21) Numéro de dépôt: 22769684.6
(22) Date de dépôt: 29.08.2022
(51) Int. Cl.: A61C 8/00

(54) **IMPLANT ZYGOMATIQUE ET KIT CORRESPONDANT**
ZYGOMATISCHES IMPLANTAT UND ENTSPRECHENDER BAUSATZ
ZYGOMATIC IMPLANT AND CORRESPONDING KIT

(30) Priorité: 31.08.2021 FR 2109093
(43) Date de publication de la demande: 10.07.2024
(73) Titulaire: Global D, 69530 Brignais (FR); Beziat, Jean-Luc, 69680 Chassieu (FR); Chapotat, Bernard, 38200 Vienne (FR); Schneck, Eric, 69003 Lyon (FR)
(72) Inventeur: BEZIAT, Jean-Luc, 69680 CHASSIEU (FR); CHAPOTAT, Bernard, 38200 VIENNE (FR); SCHNECK, Eric, 69003 LYON (FR); MARRONE, Christophe, 73470 NOVALAISE (FR); BRIAT, Mathieu, 38470 VINAY (FR)
(74) Mandataire: Corret, Hélène
(86) Numéro de dépôt international: PCT/EP2022/073968
(87) Numéro de publication internationale: WO 2023/031127

(56) Documents cités:
- US-A1- 2011 269 100
- US-A1- 2016 120 582
- US-B2- 10 792 126

## Description

L'invention concerne le domaine technique de l'implantologie dentaire et plus particulièrement celui des implants dentaires zygomatiques, ces implants étant destinés à supporter une prothèse dentaire.

Ces implants sont utilisés chez les patients présentant une perte osseuse sévère dans la mâchoire supérieure, que cela résulte d'une édentation totale et ancienne des maxillaires s'accompagnant d'une disparition de l'os alvéolaire qui supporte les dents ou encore d'une malformation, d'un traumatisme ou d'une exérèse tumorale.

En effet, la perte des dents maxillaires, chez un patient jeune, entraine une résorption progressive de l'os alvéolaire qui disparait dans sa presque totalité. Ainsi, la hauteur des maxillaires diminue et les sinus maxillaires, qu'ils limitent, ne sont plus séparés de la cavité buccale par de l'os alvéolaire mais par une mince couche d'os cortical qui est fragile et peu vascularisée.

Lorsque l'os alvéolaire s'est résorbé, il n'est plus possible de mettre en place dans cette mince paroi osseuse des implants dentaires maxillaires traditionnels sur lesquels viendrait se fixer une prothèse. En effet, l'os présent n'assurerait pas leur fixation et, en tout état de cause, ces implants pénètreraient dans le sinus maxillaire sus-jacent et seraient la cause d'infections.

Il convient encore de noter que la reconstruction alvéolaire totale par de volumineux greffons osseux (crâniens ou iliaques) est complexe et son résultat est, de surcroît, aléatoire. Elle est donc réservée à de rares patients pris en charge par des équipes de chirurgie crâniofaciale très expérimentées.

A l'opposé, le recours à un appareil complet en résine devient lui aussi difficile, voire impossible, par manque de rétention.

Un exemple d'implant maxillaire est proposé par la société Spider, sous la dénomination MiniZygo.

Cet implant comporte deux parties, un implant classique relativement court et une plaque d'ostéosynthèse fixée par des vis d'ostéosynthèse sur l'os maxillaire au voisinage ou au niveau de sa partie courbe sous-jacente à l'os zygomatique. Elles sont toujours à distance de la suture zygomatico-maxillaire et, de ce fait, de l'os zygomatique.

Sa fixation nécessite toujours une quantité d'os maxillaire résiduel importante au niveau de son ancrage.

De plus, les vis de fixation de la plaque pénètrent dans le sinus maxillaire et avec des risques de sinusites chroniques définitives.

C'est pourquoi des implants ont été conçus pour être mis en place dans un os solide, éloigné de l'os maxillaire résiduel.

Or, les os les plus proches des maxillaires sont les os zygomatiques droit et gauche, situés de part et d'autre des maxillaires et constituant de chaque côté le relief de la pommette. De tels implants, allant du bord inférieur d'un maxillaire à un os zygomatique sont dénommés implants zygomatiques.

Il s'agit d'implants cylindriques et droits qui correspondent à une simple extrapolation des implants classiques habituellement mis en position alvéolaire.

Un implant zygomatique bien connu consiste en une tige cylindrique droite présentant deux parties de diamètres différents, toutes deux filetées.

Il est mis en place depuis la région alvéolaire résorbée (ou souvent de la région latéropalatine) vers le corps de l'os zygomatique, selon une trajectoire rectiligne. Une cavité est ainsi forée à travers le maxillaire, le forage se poursuivant de façon à forer une cavité dans l'os zygomatique. Cette trajectoire traverse ainsi totalement ou partiellement le sinus maxillaire ou l'ouvre au moins de façon ponctuelle.

Une extrémité de l'implant est destinée à être vissée dans l'un des deux os zygomatiques au niveau de ses deux corticales (interne ou externe), tandis que l'autre extrémité est destinée à être positionnée dans la région palatale du maxillaire.

Un implant de ce type est notamment commercialisé par la société Straumann ou par la société Nobel sous la dénomination Branemark System Zygoma.

Il est ancré à la fois dans l'os zygomatique et dans l'os de la mâchoire et il est donc beaucoup plus long qu'un implant traditionnel positionné uniquement dans la mâchoire. Sa longueur est typiquement comprise entre 35 et 57 mm.

Avec cette technique, les patients évitent les greffes osseuses et les procédures d'élévation sinusienne.

Ces implants sont largement utilisés depuis plus de 10 ans et des travaux ont permis d'évaluer leur efficacité mais aussi les complications éventuelles.

En effet, ces implants sont longs et ils sont, de plus, insérés dans des zones à risques car elles sont proches de l'orbite et du sinus maxillaire.

Ainsi, l'accident majeur au cours de la chirurgie est la perforation du plancher de l'orbite lors du forage de la cavité destinée à l'implant ou ensuite, par la partie supérieure de l'implant, lors de son insertion.

Ceci crée un hématome intra-orbitaire qui provoque une compression du nerf optique pouvant entrainer la cécité.

Par ailleurs, la complication post-opératoire la plus fréquente est la sinusite.

En effet, même s'il existe des différences anatomiques entre les patients, l'implant passe nécessairement au moins en partie à travers le sinus. Le sinus peut présenter une réaction inflammatoire liée à l'insertion de l'implant, corps étranger, à son niveau.

De plus, une communication buccosinusienne entre le sinus et la cavité buccale peut alors apparaître.

Ceci entraine des sinusites chroniques définitives qui sont une source d'inconfort important pour les patients et devront être traitées par des antibiotiques.

Il convient de noter que ces sinusites sont très difficiles à guérir, même après le retrait de l'implant.

On peut encore noter que l'implant a fréquemment, au niveau du maxillaire, une émergence du côté palatin qui gêne la réalisation de la prothèse maxillaire dont le diamètre transversal doit être élargi pour ne pas être trop petit par rapport à celui de l'arcade antagoniste mandibulaire qu'elle soit naturelle ou prothétique. Parfois, l'implant sort même au milieu du palais, ce qui est très gênant pour le patient.

D'autres implants ont été proposés pour tenter de surmonter ces inconvénients.

On peut notamment citer l'implant décrit dans le brevet US9125708.

Cet implant se présente toujours sous la forme d'une tige droite mais elle comporte une seule partie filetée s'étendant depuis son extrémité destinée à être insérée dans l'os zygomatique.

Le reste de l'implant est donc dépourvu de filetage.

L'implant est mis en place de la façon suivante.

Un évidement ou gorge est creusé sur la face jugale de l'os du maxillaire. Un trou de fixation est ensuite réalisé à distance de cet évidement dans l'épaisseur du corps de l'os zygomatique. L'implant est alors fixé par son extrémité filetée dans ce trou de fixation, tandis que la partie non-filetée s'étend dans l'évidement présent sur la face jugale du maxillaire.

Dans l'ensemble de la description, on entend par face jugale, la face de l'os (maxillaire ou zygomatique) qui est contact avec la joue, c'est-à-dire la face externe de l'os, tournée vers l'extérieur de la face du patient.

Ainsi, cet implant ne comporte qu'un seul point d'ancrage au niveau de l'os zygomatique et il est conçu pour ne pas s'étendre dans la cavité du sinus maxillaire.

Cependant, les inventeurs ont constaté qu'il existe toujours un risque d'ouvrir le sinus notamment à la suture zygomato-maxillaire.

En effet, l'implant pénètre dans l'épaisseur du corps de l'os zygomatique au niveau de cette suture, c'est-à-dire à travers le processus maxillaire de l'os zygomatique. Contrairement à ce qu'indiquent les schémas d'implantologie, les inventeurs ont constaté que le sinus se prolonge très souvent jusque dans le processus zygomatique de l'os maxillaire. Le risque d'ouverture du sinus n'est donc pas écarté. Or, une ouverture, même de petite taille, sera à l'origine d'une infection du sinus.

Par ailleurs, la création de l'évidement dans la face jugale de l'os maxillaire conduit très souvent à le perforer car cet os est très mince, même si l'évidement est conçu pour ne pas s'étendre dans la cavité du sinus maxillaire.

Ainsi, les risques de complications infectieuses sinusiennes ne sont pas écartés avec les implants du type décrit dans le brevet US9125708. Ces complications sont extrêmement difficiles à traiter, et leur guérison impose le plus souvent la dépose de tout le matériel implantaire.

Dans la mesure où l'os zygomatique est bombé alors que l'implant est droit, il existe de surcroît un risque de voir l'extrémité de l'implant traverser l'os et ainsi s'enfoncer dans la région temporale, ce qui entraine encore d'autres conséquences dommageables pour le patient.

Enfin, il convient encore de noter que, pour assurer une bonne stabilité de la prothèse, il est nécessaire de prévoir de chaque côté, non seulement un implant du type décrit dans le brevet US9125708, mais également un implant traditionnel positionné vers l'avant de la mâchoire. Cette contrainte limite l'utilisation de cet implant car il est très souvent impossible de prévoir ces implants traditionnels du fait de la perte osseuse.

Ainsi, les implants zygomatiques connus permettent bien une réhabilitation prothétique. Cependant, dans environ 20% des cas, des complications infectieuses apparaissent et ils ne constituent donc pas une réhabilitation pérenne.

Le démontage de tous les implants zygomatiques connus est difficile alors qu'il peut s'avérer nécessaire, notamment en cas de sinusites chroniques entretenues par l'infection de l'implant ou lors d'une fracture de l'implant.

En effet, lorsqu'une extrémité de l'implant s'est bien ostéo-intégrée dans l'os zygomatique, il faut alors réséquer l'os environnant pour pouvoir mobiliser l'implant et le retirer. Ceci entraine des dégâts osseux importants mettant en jeu l'intégrité du patient.

Il convient de noter également qu'avec les implants connus, l'extrémité distale intrazygomatique de l'implant peut se fracturer accidentellement, lorsqu'une force excessive est exercée sur l'implant lors de son vissage. Il faut alors retirer le fragment d'implant qui est resté dans l'os, ce qui nécessite encore de le dégager en forant l'os qui l'entoure, avec les mêmes conséquences néfastes pour le patient.

Les documents de l'état de la techniques US 10 792 126 B2 et US 2016/120582 A1 sont également cités.

Le document US 2011/269100 A1 divulgue quant à lui un implant destiné à la chirurgie orthognatique du maxillaire.

L'invention a donc pour objectif de proposer un implant dentaire zygomatique qui évite ces inconvénients.

La démarche des inventeurs va à l'encontre de toutes les solutions proposées dans l'état de l'art en proposant un implant dentaire qui est destiné à être fixé uniquement par et sur la face jugale d'un des deux os zygomatiques, sans pénétrer dans cet os, ce qui évite, de ce fait, tout risque de pénétration intra sinusienne de l'implant ou de brèche sinusienne et donc de sinusites, et permet un démontage facile de l'implant en cas de problèmes. En d'autres termes, cet implant est positionné sur la face jugale de l'un des deux os zygomatiques (et non des deux) et il est fixé par cette face jugale grâce à des moyens de fixation qui, eux, peuvent pénétrer dans cet os. Il est préférable que ces moyens de fixation ne traversent pas l'os zygomatique.

Ainsi, l'invention concerne un implant zygomatique, destiné à supporter une prothèse dentaire et à être fixé uniquement par la face jugale d'un os zygomatique d'un patient, cet implant comprenant :
- Une partie zygomatique de fixation agencée pour être fixée sur la face jugale de l'os zygomatique d'un patient, formant une plaque, dans laquelle est définie au moins une ouverture de fixation qui traverse la plaque et qui est configurée pour recevoir un élément de fixation de façon à fixer la plaque sur la face jugale de l'os zygomatique d'un patient,
- Une partie maxillaire comportant au moins un élément allongé agencé pour s'étendre en regard de la face jugale de l'os maxillaire du patient et dont une extrémité est reliée à la partie zygomatique et dont l'autre extrémité est libre et destinée à être reliée à une interface de connexion avec une prothèse dentaire.

Dans des modes de réalisation avantageux, on a de plus recours à l'une et/ou à l'autre des dispositions suivantes :
- la partie zygomatique est réalisée d'une pièce avec la partie maxillaire.
- l'implant est réalisé en au moins deux pièces indépendantes, dans lequel la partie zygomatique définit au moins un moyen de fixation d'un élément allongé.
- ladite plaque comprend une seule ouverture de fixation et, éventuellement, dans ce cas, sur sa face interne convexe destinée à être en contact avec la face jugale de l'os zygomatique, au moins un relief en saillie par rapport à ladite face interne.
- ladite plaque comprend au moins deux ouvertures de fixation.
- la partie maxillaire comporte au moins deux éléments allongés, lesdits éléments allongés formant entre eux un angle aigu.
- ladite partie zygomatique est préformée de manière préopératoire pour correspondre à la forme extérieure de l'os zygomatique du patient.
- ledit au moins un élément allongé est préformé de manière préopératoire pour correspondre à la forme et aux dimensions de la face jugale de l'os maxillaire du patient.

L'invention concerne également un kit pour réaliser un implant zygomatique, destiné à recevoir une prothèse dentaire et à être fixé uniquement sur la face jugale de l'os zygomatique d'un patient, comprenant :
- Une partie zygomatique de fixation agencée pour être fixée sur la face jugale de l'os zygomatique d'un patient, formant une plaque , dans laquelle est définie au moins une ouverture de fixation qui traverse la plaque et qui est configurée pour recevoir un élément de fixation de façon à fixer la plaque sur la face jugale de l'os zygomatique d'un patient, la partie zygomatique définissant au moins un moyen de fixation d'un élément allongé, dans lequel ledit élément allongé peut être fixé de façon amovible et
- Au moins un élément allongé agencé pour s'étendre en regard de la face jugale de l'os maxillaire du patient et dont une extrémité est destinée à être fixée dans un moyen de fixation de la partie zygomatique et dont l'autre extrémité est libre et destinée à être reliée à une interface de connexion avec une prothèse dentaire.

Dans des modes de réalisation avantageux, on a de plus recours à l'une et/ou à l'autre des dispositions suivantes :
- ladite partie zygomatique est préformée de manière préopératoire pour correspondre à la forme extérieure de l'os zygomatique du patient.
- ladite partie zygomatique est standard.
- ledit au moins un élément allongé est préformé de manière préopératoire pour correspondre à la forme et aux dimensions de la face jugale de l'os maxillaire du patient.
- ledit au moins un élément allongé est standard.

L'invention concerne enfin une méthode chirurgicale pour la mise en place d'un implant comprenant les étapes suivantes :
- Incision de la muqueuse vestibulaire supérieure, au niveau de la région alvéolaire dépourvue de dents résiduelle
- Décollement sous-périoste exposant la face jugale des os maxillaires et la face jugale de l'os zygomatique
- Forage dans l'os zygomatique, depuis sa face jugale, des trous de fixation des éléments de fixation de l'implant
- Mise en place de la partie zygomatique de l'implant sur la face jugale de l'os zygomatique et fixation dans ce dernier au moyen de vis de fixation.
- Fermeture de la voie d'abord.

La partie maxillaire de l'implant peut être mise en place lors de l'intervention initiale (correspondant à la pose de la partie zygomatique) ou ultérieurement, lors d'une deuxième intervention.

L'invention sera mieux comprise et d'autres buts, avantages et caractéristiques de celle-ci apparaitront plus clairement à la lecture de la description qui suit et qui est faite au regard des dessins annexés sur lesquels :
[Fig. 1] est une vue en plan d'un exemple d'implant zygomatique selon l'invention.
[Fig. 2] est une vue en perspective d'une variante de l'implant de la figure 1.
[Fig. 3] est une vue de trois-quarts antérieure en perspective illustrant l'implant de la figure 1 en position sur un massif facial.
[Fig. 4] est une vue partielle en coupe frontale illustrant l'implant de la figure 1 en position sur un massif facial.
[Fig. 5] est une vue en plan d'un autre exemple d'implant zygomatique selon l'invention.
[Fig. 6] est une vue de trois-quarts antérieure illustrant l'implant du type de celui de la figure 5 en position sur la partie droite d'un massif facial.
[Fig. 7] est une vue de profil en perspective illustrant l'implant du type de celui de la figure 5 en position sur la partie droite d'un massif facial.
[Fig. 8] est une vue en plan d'un autre exemple d'implant zygomatique selon l'invention réalisé en trois parties indépendantes.
[Fig. 8a] illustre une variante de la figure 8.
[Fig. 9] est une vue en perspective du guide de forage.
[Fig. 10], [Fig. 11] et [Fig. 12] illustrent trois étapes de la méthode chirurgicale de mise en place d'un implant selon l'invention.

Les éléments communs aux différentes figures seront désignés par les mêmes références.

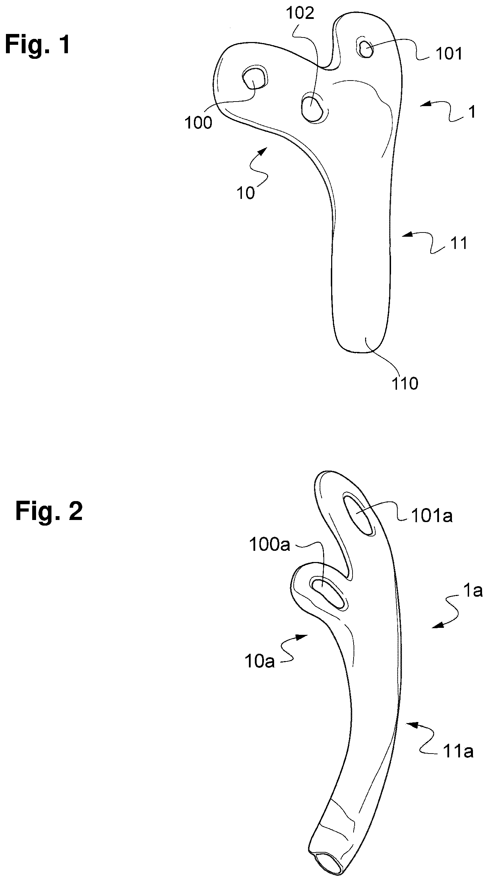

Les figures 1 à 4 illustrent un exemple d'implant destiné à être placé sur la partie droite du massif facial d'un patient.

On rappelle ici que, le squelette de la tête comprend le crâne et le massif facial.

Elles montrent que cet implant 1, réalisé d'une pièce, comporte une partie zygomatique 10 et une partie maxillaire 11.

La partie zygomatique 10 présente la forme d'une plaque. Dans cet exemple, vue de dessus, la plaque a une forme générale en Y mais l'invention n'est pas limitée à cet exemple. La plaque peut présenter une forme quelconque, par exemple en disque, en triangle, en carré ou encore en X, Z ou W.

Dans cette plaque, sont définies trois ouvertures 100, 101 et 102 de fixation. Chacune d'elles traverse la plaque et est configurée pour recevoir un élément de fixation, tel qu'une vis-implant, de façon à fixer la plaque par et sur la face jugale de l'os zygomatique d'un patient.

Cependant, l'invention n'est pas limitée à cet exemple. Ainsi, la plaque peut ne comporter qu'une seule ouverture de fixation pour un élément de fixation. Dans ce cas, pour assurer la stabilité de l'implant, un autre moyen d'ancrage peut être prévu, par exemple sous la forme d'un relief. Il peut notamment s'agir un ergot prévu sur la partie zygomatique de l'implant, sur la surface de cette partie zygomatique destinée à être en regard de la face jugale de l'os zygomatique lorsque l'implant est mis en place sur un patient (c'est-à-dire la face interne de la partie zygomatique), et en saillie par rapport à cette face interne. Cet ergot est destiné à s'insérer dans un trou correspondant, réalisé par le chirurgien au niveau de la face jugale de l'os zygomatique du patient. On peut également prévoir un prolongement en équerre de la plaque zygomatique, situé à une extrémité de la plaque et également en saillie par rapport à la face interne de la plaque. Ce prolongement est destiné à insérer sous le bord antéro-inférieur de l'os zygomatique,

La plaque peut aussi comporter deux ouvertures de fixation pour un élément de fixation.

De façon générale, il est préférable que la plaque comporte au moins deux moyens d'ancrage permettant d'assurer un positionnement stable par rapport à l'os zygomatique.

Par ailleurs, cette plaque est de préférence incurvée de façon à s'adapter à la forme bombée de l'os zygomatique.

La partie maxillaire 11 prolonge la partie zygomatique 10 et forme un élément allongé qui s'étendra depuis la partie zygomatique en regard de l'os maxillaire jusqu'à la prothèse dentaire, lorsque l'implant sera positionné sur le massif facial. On entend par élément allongé, un élément étiré en longueur ou encore plus long que large, ce dernier allant en l'espèce de la partie zygomatique de l'implant jusqu'à l'interface de connexion à la prothèse dentaire.

La longueur de cette partie maxillaire correspond sensiblement à la hauteur résiduelle de l'os maxillaire situé sous l'os zygomatique.

L'extrémité libre 110 de la partie maxillaire est destinée à être reliée à une interface de connexion avec une prothèse dentaire (non illustrées).

Cet élément allongé n'est pas conçu pour être fixé sur l'os maxillaire et c'est pourquoi il ne comporte aucune ouverture le traversant qui est destinée à recevoir un élément de fixation tel qu'une vis.

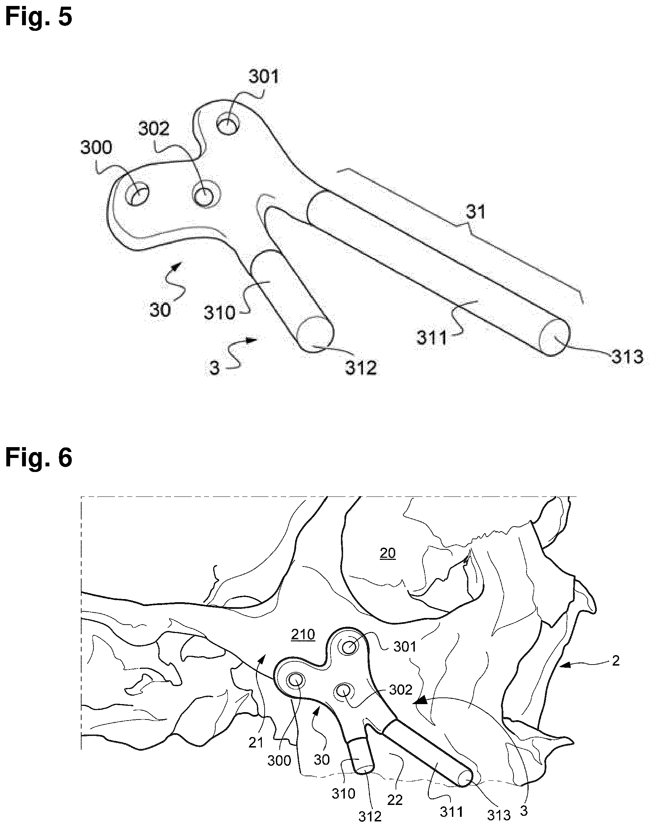

Comme cela sera illustré à la figure 5, l'invention n'est pas limitée à ce type de partie maxillaire et cette dernière peut comporter plusieurs éléments allongés.

La forme de l'implant 1 est illustrée plus précisément sur la figure 2 qui illustre en perspective un implant 1a qui est une variante de l'implant 1 illustré à la figure 1.

En effet, cet implant 1a comporte toujours une partie zygomatique 10a et une partie maxillaire 11a mais seulement deux ouvertures de fixation 100a et 101a pour un élément de fixation sont prévues dans la partie zygomatique 10a. Là encore, l'élément allongé 11a ne comporte aucune ouverture traversante pour un élément de fixation.

La figure 2 montre que la partie zygomatique 10a est incurvée, tandis que la partie maxillaire 11a est sensiblement droite.

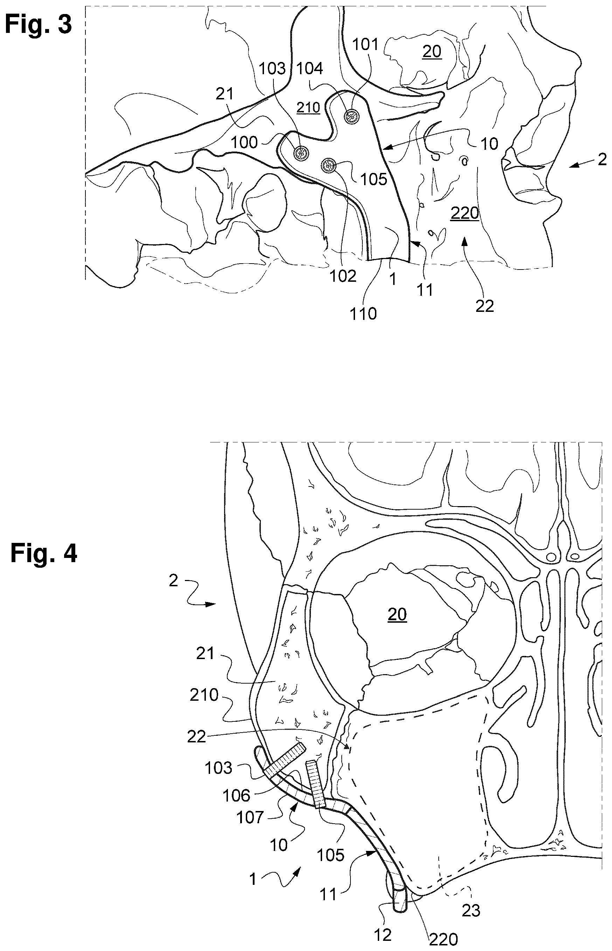

Il est maintenant fait référence aux figures 3 et 4 qui montrent l'implant 1 fixé sur un massif facial 2.

Sur les figures 3 et 4, sont identifiés l'orbite osseuse 20, l'os zygomatique 21, l'os maxillaire 22 et le sinus maxillaire 23, ce dernier étant représenté en pointillés (du côté droit du crâne). Ces figures montrent que la partie zygomatique 10 est fixée sur la face jugale 210 de l'os zygomatique grâce à des éléments de fixation 103, 104 et 105, chacun d'eux passant à travers une ouverture de fixation 100,101,102 et étant inséré dans l'épaisseur de l'os zygomatique 21 en étant positionné sensiblement orthogonalement à la face jugale 210 de l'os. Ces éléments de fixation peuvent notamment être des vis-implants réalisées dans un matériau ostéo-intégrable tel que le titane ou le zircon.

Comme le montre plus précisément la figure 4, la face concave 106 de la plaque 10 (face interne de la plaque) est en regard de la face jugale 210 de l'os zygomatique de façon à venir en contact avec elle et à en épouser la forme générale bombée, tandis que sa face convexe 107 (face externe de la plaque) est libre. En pratique, elle sera en contact avec les tissus mous de la joue.

La partie maxillaire 11 de l'implant s'étend quant à elle en regard de la face jugale de l'os maxillaire 22. En d'autres termes, la partie maxillaire 11 n'est pas fixée dans l'os maxillaire.

Elle est prolongée, du côté opposé à la partie zygomatique 10, par une interface de connexion 12 à une prothèse.

Ainsi, aucune partie de l'implant 1 ne traverse l'os maxillaire 22 (sauf éventuellement au niveau d'une encoche réalisée dans la crête osseuse de l'os maxillaire) ou la cavité du sinus maxillaire 23. Par ailleurs, les éléments de fixation 103,104,105 pénètrent uniquement dans l'os zygomatique et ce, depuis sa face jugale et sont donc complétement à distance du sinus.

La figure 5 illustre un autre exemple d'un implant 3 selon l'invention, destiné à être fixé sur le côté droit du massif facial.

Cet implant 3 comporte toujours une partie zygomatique 30 présentant la forme d'une plaque de préférence incurvée pour que sa face interne concave destinée à venir en contact avec l'os zygomatique épouse la forme de ce dernier. Trois ouvertures de fixation 300,301,302 traversent la partie 30.

Sa partie maxillaire 31 prolonge la partie zygomatique 30 mais comporte deux éléments allongés 310,311 s'étendant depuis la partie zygomatique et non un seul élément allongé comme pour l'implant de la figure 1.

La figure 5 montre que ces deux éléments allongés forment entre eux un angle aigu. Cet angle est généralement compris entre 15° et 45°.

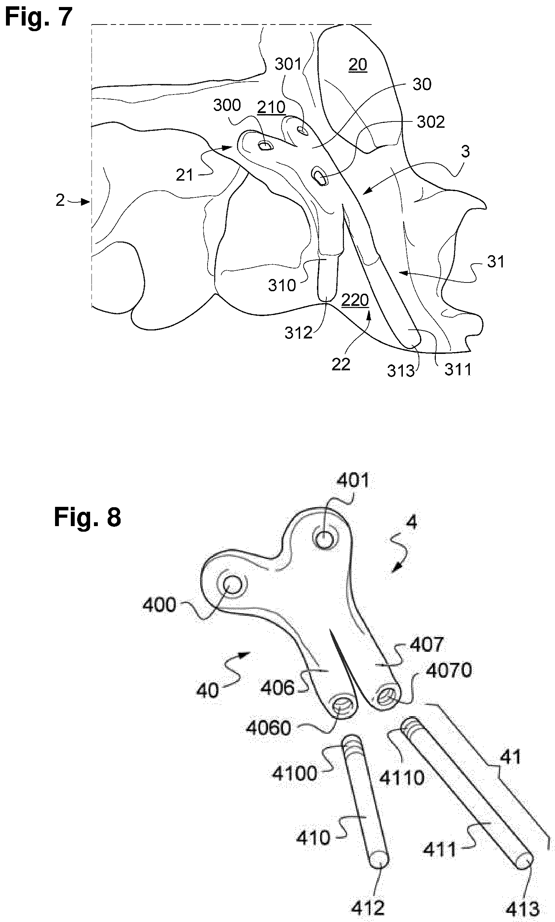

Les figures 6 et 7 illustrent l'implant 3 fixé sur le massif facial 2, du côté droit .

Comme pour l'implant 1, la partie zygomatique 30 est fixée sur la face jugale de l'os zygomatique 21 grâce à des éléments de fixation (non illustrés), chacun d'eux passant à travers une ouverture de fixation 300, 301, 302 et étant inséré dans l'épaisseur de l'os zygomatique en étant positionné sensiblement orthogonalement à la face jugale 210 de l'os.

La partie maxillaire 31 s'étend en regard de la face jugale 220 de l'os maxillaire. En d'autres termes, la partie maxillaire 11 n'est pas fixée dans l'os maxillaire.

La figure 6 montre que, grâce à l'angle entre les deux éléments allongés, l'élément postérieur 310 peut être dirigé vers la position de la première molaire disparue tandis que l'élément antérieur 311 s'étend vers la position de la canine également extraite.

En pratique, l'élément postérieur 310 s'étend sensiblement verticalement.

Ainsi, la longueur de chaque élément allongé correspond sensiblement à la distance entre la partie inférieure de l'os zygomatique du patient et la zone de la partie inférieure de l'os maxillaire (c'est-à-dire l'os alvéolaire ou la crête osseuse) vers laquelle l'élément allongé est dirigé.

L'extrémité libre 312,313 de chaque élément allongé est destinée à être reliée à une interface de connexion avec une prothèse dentaire.

En prévoyant un implant 3 avec deux éléments allongés de chaque côté du massif facial, il est possible de stabiliser une prothèse grâce à ces deux points de fixation, l'un postérieur, l'un antérieur, de chaque côté, sans que d'autres moyens soient nécessaires.

La figure 7 montre la courbure de la partie zygomatique de l'implant 3, laquelle lui permet de s'adapter à la forme bombée de l'os zygomatique.

Un implant selon l'invention pourrait comporter plus de deux éléments allongés, notamment en cancérologie, après l'exérèse d'une partie étendue des os maxillaires.

Il peut alors être envisagé un troisième élément allongé, dirigé vers la région palatine réséquée, de façon à pouvoir stabiliser une reconstruction prothétique maxillaire étendue.

Dans les exemples de réalisation qui viennent d'être décrits, les implants sont conçus d'une pièce. Cependant, l'invention n'est pas limitée à ces exemples et l'implant peut être conçu de telle sorte que sa partie zygomatique et sa partie maxillaire sont indépendantes l'une de l'autre.

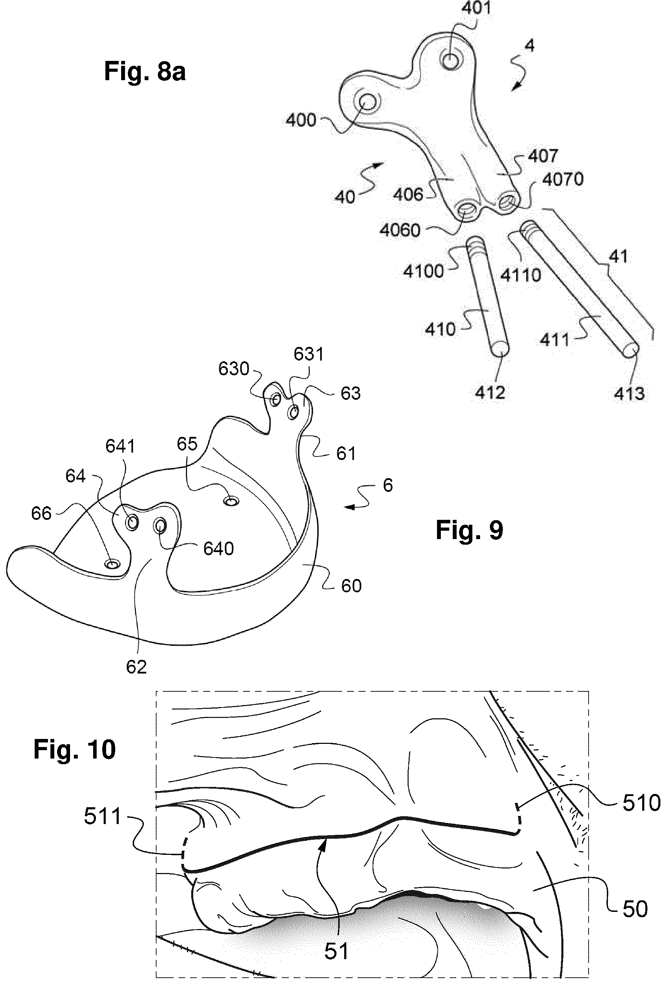

Il est maintenant fait référence à la figure 8 qui illustre un exemple de kit pour réaliser un implant du type de celui illustré aux figures 5 à 7, c'est-à-dire comportant deux éléments allongés. Cet implant est réalisé en plusieurs parties et il est donc illustré ici à l'état démonté.

Cet implant 4 comporte ainsi une partie zygomatique 40 formant une plaque de préférence incurvée dans laquelle sont définies deux ouvertures de fixation 400,401 qui traversent la plaque et qui sont destinées à recevoir des éléments de fixation.

Cette partie 40 comporte deux moyens de fixation 406, 407 pour deux éléments allongés 410, 411 qui forment la partie maxillaire 41 de l'implant 4.

Dans l'exemple illustré à la figure 8, les deux moyens de fixation forment deux branches, séparées l'une de l'autre. Cependant, l'invention n'est pas limitée à ce mode de réalisation. Comme l'illustre la figure 8a, ces deux moyens peuvent également être réunis sur toute ou partie de leur longueur.

Ces moyens de fixation sont destinés à recevoir une extrémité d'un élément allongé et à le solidariser avec la partie zygomatique 40, de façon à réaliser l'assemblage entre les éléments allongés 410, 411 et la partie zygomatique 40. Les éléments allongés peuvent être fixées de manière amovible dans les moyens de fixation.

Les moyens de fixation 406,407 peuvent ainsi présenter, de façon non limitative, un évidement sensiblement cylindrique taraudé 4060,4070, tandis qu'une extrémité de chaque élément allongé 410,411 comporte un filetage 4100,4110 de façon à pouvoir être vissée dans cet évidement.

L'autre extrémité 412,413 de chaque élément allongé 410,411 est destinée à être connectée à une prothèse.

L'extrémité de l'élément allongé peut également comporter une rotule (non illustrée). Le moyen de fixation correspondant présente alors un évidement complémentaire dans lequel est insérée la rotule. Ce mode de réalisation assure un degré de liberté entre la partie zygomatique et la partie maxillaire. Ceci permet au chirurgien d'ajuster, au cours de l'opération, la position de chaque élément allongé 410,411 par rapport à la partie zygomatique 40, pour trouver une position optimisée pour le patient.

En pratique, ce kit peut comprendre une plaque zygomatique et un jeu d'éléments allongés qui sont livrés simultanément au praticien. Celui-ci peut également préférer une livraison en deux temps, notamment lorsqu'il choisit, comme cela sera expliqué ultérieurement, de mettre en place les éléments allongés plusieurs mois après avoir fixé la partie zygomatique de l'implant. Il peut également choisir de détenir en stock une quantité importante d'éléments allongés standards et de commander au fabricant, pour chaque patient, une partie zygomatique spécifique. Dans tous les cas, il est finalement fourni au praticien un kit ou encore un ensemble qui comprend une partie zygomatique et au moins un élément allongé destiné à être fixé dans la partie zygomatique.

D'autres moyens de fixation pourraient être prévus sans sortir du cadre de l'invention tel que défini par les revendications qui suivent.

Les deux éléments allongés se présentent ici sous forme de tiges cylindriques.

L'invention n'est cependant pas limitée à ce mode de réalisation et ils pourraient également être en partie aplatis ou présenter une section elliptique par exemple.

En référence aux figures 10 à 12 vont maintenant être décrites des étapes de la méthode chirurgicale de mise en place d'un implant selon l'invention, réalisé en plusieurs parties, tel que l'implant 4 illustré à la figure 8, avec un guide opératoire illustré à la figure 9.

La figure 10 illustre la partie basse du maxillaire avec la région alvéolaire résiduelle 50 dépourvue de dents.

La ligne 51 en trait continu représente le tracé de l'incision de la muqueuse supérieure que va réaliser le chirurgien, ici du côté droit.

Cette incision peut se prolonger, à chacune de ses extrémités, par une petite incision 510, 511 de décharge verticale postérieure.

Sa topographie est adaptée à l'importance de la résorption osseuse (crestale ou vestibulaire).

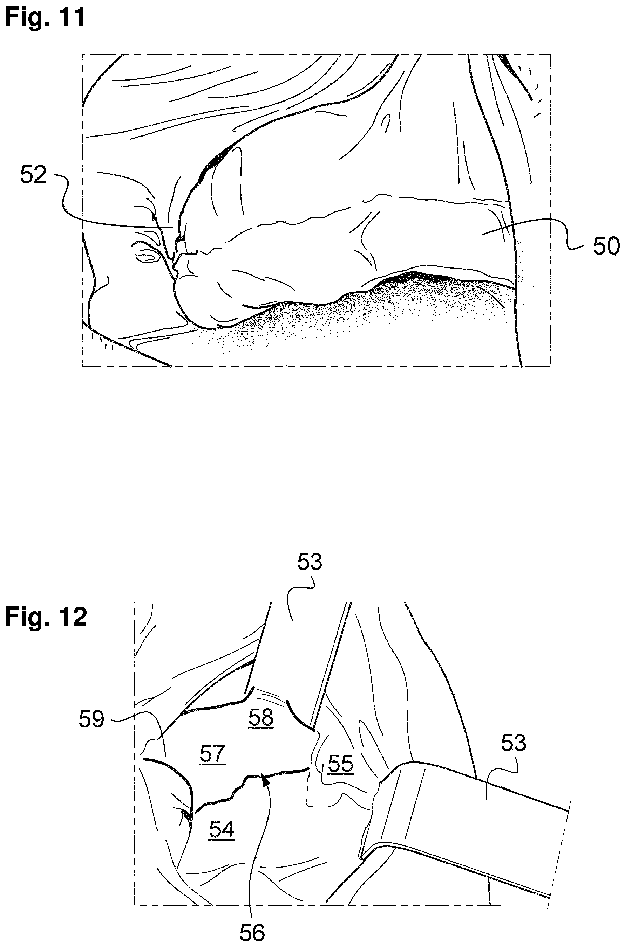

La figure 11 illustre, une fois la muqueuse 52 incisée, le décollement sous-périoste des parties molles recouvrant la face jugale du maxillaire.

Des écarteurs 53 sont ensuite mis en place pour exposer la zone opératoire étendue à la face jugale du maxillaire 54, au bord orbitaire inférieur en haut (après exposition du nerf infra-orbitaire 55 à son émergence), à la suture zygomato-maxillaire 56 en dehors, à la face jugale de l'os zygomatique 57, jusqu'au processus zygomatique de l'os frontal 58 en haut et à celui de l'os temporal 59 en arrière.

Le chirurgien peut alors utiliser un guide de forage 6 qui est décrit en référence à la figure 9.

Ce guide est réalisé sur mesure pour chaque patient, de manière préopératoire. Sa conception sera décrite ultérieurement avec celle d'un implant également conçu sur mesure de manière préopératoire.

Il comporte une gouttière 60 venant s'encastrer sur la région alvéolaire 50 et se prolongeant sur le palais.

Cette gouttière est reliée par l'intermédiaire de deux tiges 61,62 à deux plaquettes 63,64. Le guide 6 est ici conçu pour deux implants (un implant du côté droit et un implant du côté gauche) et il comporte donc deux tiges et deux plaquettes. Chaque plaquette correspond à la position de la partie zygomatique de l'implant à poser et comporte des ouvertures correspondant aux ouvertures de fixation de l'implant.

Ce guide est fixé de façon temporaire au palais par des vis insérées dans les ouvertures 65,66.

Le chirurgien peut ensuite forer des trous dans l'os zygomatique par les ouvertures du guide et, une fois le forage terminé, déposer le guide.

La partie zygomatique de l'implant est alors mise en place sur la face jugale de l'os zygomatique et fixée dans l'os par des vis de fixation ou vis-implants passant au travers des ouvertures de fixation de l'implant et vissées dans les trous forés dans l'os.

Le chirurgien peut prévoir de mettre en place de petits greffons osseux en des points appropriés et notamment, au niveau des futures zones de contact entre les éléments allongés de la partie maxillaire et le bord inférieur du maxillaire.

Le chirurgien procède à la fermeture de la voie d'abord, si la mise en place du reste de l'implant est prévue dans un deuxième temps.

Une telle mise en place est préférée pour certains patients. Elle permet également de vérifier les dimensions des éléments allongés de la partie maxillaire.

Quelques mois plus tard, le chirurgien réalise une incision 51 itérative, telle qu'illustrée sur la figure 10.

Le décollement de la muqueuse est ensuite réalisé de façon similaire mais moins étendue, et uniquement jusqu'à la partie zygomatique de l'implant dont seule la partie inférieure est exposée.

Le chirurgien met alors en place chaque élément allongé de la partie maxillaire le long de la face jugale de l'os maxillaire et insère l'une de ses extrémités dans un moyen de fixation correspondant de la partie zygomatique, puis bloque la liaison entre eux, par exemple par vissage.

Le chirurgien procède enfin à la fermeture de la voie d'abord.

Bien entendu, les étapes qui viennent être décrites sont réalisées de manière similaire pour la mise en place d'un implant sur le côté gauche du patient.

Dans la mesure où l'extrémité libre de chaque élément allongé est reliée à une interface de connexion avec une prothèse dentaire, cette dernière pourra être mise en place.

Bien entendu, la mise en place de l'implant peut aussi être réalisée en un seul temps, notamment lorsque l'implant est formé d'une seule pièce.

Les différentes étapes qui viennent d'être décrites confirment qu'avec l'implant selon l'invention, sont supprimés tous les risques d'ouverture du sinus, puisque la partie zygomatique de l'implant est fixée sur la face jugale de l'os zygomatique et que sa partie maxillaire s'étend en regard de la face jugale de l'os maxillaire, sans y pénétrer.

Par ailleurs, compte tenu de la conception de l'implant selon l'invention et de la technique de mise en place, sont éliminées les fautes opératoires survenant lors de sa pose, comme la pénétration accidentelle dans une région voisine.

Les implants selon l'invention peuvent être des implants standards proposés en plusieurs dimensions différentes pour que le chirurgien puisse choisir celui qui est le plus approprié à son patient.

Compte tenu de la perte osseuse subie par le patient, la hauteur de l'os maxillaire est réduite et généralement comprise entre 1,5 et 2 cm.

C'est pourquoi la longueur de chaque élément allongé sera en général comprise entre 10 et 20 mm.

Dans le cas d'implants standards, chaque élément allongé pourra se présenter sous la forme d'une tige cylindrique de diamètre inférieur à 4,5 mm et dont la longueur sera très variable, inférieure à 8 mm et allant jusqu'à plus de 25 mm. Ces implants standards pourront être proposés en plusieurs longueurs, par exemple égales à 10 mm, 12 mm, 14 mm, 16 mm, 18 mm ou 20 mm.

Par ailleurs, la partie zygomatique pourra elle aussi être disponible en plusieurs tailles et formes différents.

A titre d'exemple, les implants seront disponibles en deux ou trois tailles et pour chaque côté, droit et gauche.

Les implants selon l'invention peuvent également être réalisés sur mesure et de manière préopératoire, selon un protocole informatique s'appuyant sur les données scanographiques de chaque patient et sur celles de la bibliothèque des caractéristiques des parties zygomatique et maxillaire.

Pour cela, une imagerie du crâne du patient, et en particulier de la zone inférieure du crâne est réalisée, par exemple grâce à un CT Scan (scanner) ou un CBCT (Cone Beam Computed Tomography ou Cone Beam).

Les images issues du scanner ou du Cone Beam sont ensuite chargées dans un ordinateur. Un logiciel de traitement des images permet de créer un modèle virtuel du crâne qui pourra être manipulé par un utilisateur et servir notamment de support à la conception de matériels personnalisés.

Ce traitement des images et cette manipulation peuvent être réalisés grâce à des logiciels standards, comme le logiciel Mimics commercialisé par la société Materialise. De tels logiciels permettent à l'utilisateur, notamment un chirurgien, d'analyser les caractéristiques du patient et de concevoir virtuellement à la fois un implant et un guide sur mesure.

Sur la base du modèle virtuel du crâne, le chirurgien conçoit tout d'abord un guide de forage, tel que celui illustré sur la figure 9.

Ce guide est spécifique à chaque patient et il est donc réalisé selon les données de fichiers informatiques établis à partir du scanner (ou d'un cône beam) du patient et d'un montage prothétique des dents figurant sur la prothèse définitive réalisée à partir du plan occlusal propre au patient.

Pour cela, sur le modèle virtuel du crâne, le chirurgien détermine les emplacements des trous de fixation de la partie zygomatique de l'implant dans l'os zygomatique.

Il détermine ensuite la dimension des éléments constitutifs du guide ainsi que leur forme.

Un fichier numérique correspondant au modèle virtuel du guide chirurgical peut alors être stocké dans une mémoire de l'ordinateur.

Dans une variante, après conception d'une prothèse, une image scanographique en est réalisée qui est superposée avec celles du scanner des structures osseuses pour confectionner un guide chirurgical permettant la pose de l'implant.

L'utilisateur ou le chirurgien conçoit ensuite un modèle virtuel d'implant, toujours en utilisant le modèle virtuel du crâne.

Ainsi, la partie zygomatique de l'implant présentera une forme générale incurvée qui sera adaptée à celle de l'os zygomatique du patient et, en particulier, la surface de la face (interne et convexe) de cette partie zygomatique, destinée à venir en contact avec la face jugale de l'os, sera choisie pour s'adapter à elle.

L'orientation des éléments allongés sera également adaptée au crâne du patient et les moyens de fixation prévus sur la partie zygomatique de l'implant seront conçus en conséquence.

De même, la longueur et la forme de chaque élément allongé sera choisie pour s'adapter aux dimensions et à la forme de l'os maxillaire. Ces éléments allongés pourront ainsi être légèrement courbés. Il convient cependant de noter que, compte tenu de la faible longueur des éléments allongés, leur courbure est relativement faible.

Un fichier numérique correspondant au modèle virtuel de l'implant pourra alors être stocké dans une mémoire de l'ordinateur.

Ces deux fichiers numériques peuvent ensuite être transférés depuis l'ordinateur à une imprimante 3D ou une machine de fabrication CAO/FAO classique de façon à fabriquer le guide chirurgical et l'implant.

On comprend qu'une conception de l'implant en plusieurs parties indépendantes permet de combiner toutes les possibilités qui ont été décrites : utiliser deux parties standards de l'implant ou au contraire réaliser les deux parties de façon individualisée, réaliser la partie zygomatique de l'implant de façon individualisée ou encore sur mesure et d'utiliser par ailleurs des éléments allongés standards ou enfin, utiliser une partie zygomatique standard et réaliser les éléments allongés sur mesure.

Enfin, un implant réalisé en plusieurs pièces standards permet plus facilement de s'adapter à la morphologie d'un patient, à partir d'un nombre limité des pièces différentes.

Un tel implant présente également l'avantage de simplifier les interventions lorsque l'implant doit être démonté, notamment lorsqu'un phénomène inflammatoire de type péri-implantite est observé. Dans ce cas, dès que le diagnostic est fait, un ou plusieurs éléments allongés sont retirés en les désolidarisant de la partie zygomatique. Une fois cette péri-implantite guérie, des éléments allongés sont remis en place, sans qu'il soit nécessaire de retirer la partie zygomatique.

Quel que soit le type d'implant, en plusieurs parties ou d'une seule pièce, le retrait de la partie zygomatique, si celle-ci est nécessaire, n'entraine pas de dégâts osseux car les vis sont retirées depuis l'extérieur de l'os. Ainsi, même si les vis sont ostéo-intégrée, elles sont facilement accessibles et il n'est notamment pas nécessaire de réaliser une tranchée dans l'os pour les atteindre, comme pour les implants zygomatiques classiques.

L'invention n'est pas limitée aux modes de réalisation plus particulièrement décrits. Elle en embrasse au contraire toutes les variantes et notamment celles où la forme de la partie zygomatique ou des éléments allongés est différente de celle décrite et celles où, pour un implant réalisé en plusieurs pièces, la fixation entre celles-ci est réalisée par des moyens différents de ceux décrits et/ou illustrés.

## Revendications

1. Implant dentaire zygomatique (1, 3, 4) destiné à supporter une prothèse dentaire et à être fixé uniquement sur la face jugale de l'os zygomatique (21) d'un patient, cet implant comprenant :
- Une partie zygomatique (10, 30, 40) de fixation agencée pour être fixée sur la face jugale (210) de l'os zygomatique d'un patient, formant une plaque, dans laquelle est définie au moins une ouverture de fixation (100, 101,102 ; 300, 301,302 ; 400,401,402) qui traverse la plaque et qui est configurée pour recevoir un élément de fixation (103,104,105 ; 303,304,305) de façon à fixer la plaque sur la face jugale de l'os zygomatique d'un patient ;
- Une partie maxillaire (11, 31,41) comportant au moins un élément allongé (11 ; 310,311 ; 410,411) agencé pour s'étendre en regard de la face jugale de l'os maxillaire du patient et dont une extrémité est reliée à la partie zygomatique et dont l'autre extrémité est libre et reliée à une interface de connexion avec une prothèse dentaire.

2. Implant selon la revendication 1, dans lequel la partie zygomatique (10 ; 30) est réalisée d'une pièce avec la partie maxillaire (11 ; 31).

3. Implant selon la revendication 1, réalisé en au moins deux pièces indépendantes, dans lequel la partie zygomatique (40) définit au moins un moyen de fixation (406,407) d'un élément allongé (410,411).

4. Implant selon l'une des revendications 1 à 3, dans lequel ladite plaque comprend une seule ouverture de fixation.

5. Implant selon la revendication 4, comprenant, sur sa face interne convexe destinée à être en contact avec la face jugale de l'os zygomatique, au moins un relief en saillie par rapport à ladite face interne.

6. Implant selon l'une des revendications 1 à 3, dans lequel ladite plaque (11,31,41) comprend au moins deux ouvertures de fixation.

7. Implant selon l'une des revendications 1 à 6, dans lequel la partie maxillaire (31,41) comporte au moins deux éléments allongés (310,311 ;410,411), lesdits éléments allongés formant entre eux un angle aigu.

8. Implant selon l'une des revendications 1 à 7, dans lequel ladite partie zygomatique est préformée de manière préopératoire pour correspondre à la forme extérieure de l'os zygomatique du patient.

9. Implant selon l'une des revendications 1 à 8, dans lequel ledit au moins un élément allongé est préformé de manière préopératoire pour correspondre à la forme et aux dimensions de la face jugale de l'os maxillaire du patient.

10. Kit pour réaliser un implant dentaire zygomatique (4) destiné à recevoir une prothèse dentaire et à être fixé uniquement sur la face jugale de l'os zygomatique (21) d'un patient, comprenant :
- Une partie zygomatique (40) de fixation agencée pour être fixée sur la face jugale de l'os zygomatique d'un patient, formant une plaque , dans laquelle est définie au moins une ouverture de fixation (400,401,402) qui traverse la plaque et qui est configurée pour recevoir un élément de fixation de façon à fixer la plaque sur la face jugale de l'os zygomatique d'un patient, la partie zygomatique définissant au moins un moyen de fixation (406,407) d'un élément allongé, dans lequel ledit élément allongé peut être fixé de façon amovible et
- Au moins un élément allongé (410,411) agencé pour s'étendre en regard de la face jugale de l'os maxillaire du patient et dont une extrémité est destinée à être fixée dans un moyen de fixation de la partie zygomatique et dont l'autre extrémité est libre et reliée à une interface de connexion avec une prothèse dentaire.

11. Kit selon la revendication 10, dans lequel ladite partie zygomatique est préformée de manière préopératoire pour correspondre à la forme extérieure de l'os zygomatique du patient.

12. Kit selon la revendication 10, dans lequel ladite partie zygomatique est standard.

13. Kit selon l'une des revendications 10 à 12, dans lequel ledit au moins un élément allongé est préformé de manière préopératoire pour correspondre à la forme et aux dimensions de la face jugale de l'os maxillaire du patient.

14. Kit selon l'une des revendications 10 à 12, dans lequel ledit au moins un élément allongé est standard.

## Patentansprüche

1. Zygomatisches Zahnimplantat (1, 3, 4), welches dazu bestimmt ist, eine Zahnprothese zu stützen und nur auf der jugale Fläche des Jochbeins (21) eines Patienten befestigt zu werden, wobei dieses Implantat umfasst:
- einen Jochbein-Befestigungsteil (10, 30, 40), der dazu eingerichtet ist, auf der jugale Fläche (210) des Jochbeins eines Patienten befestigt zu werden, und eine Platte bildet, in der mindestens eine Befestigungsöffnung (100, 101, 102; 300, 301, 302; 400, 401, 402) definiert ist, welche die Platte durchquert und welche dafür ausgelegt ist, ein Befestigungselement (103, 104, 105; 303, 304, 305) aufzunehmen, um die Platte auf der jugale Fläche des Jochbeins eines Patienten zu befestigen;
- einen Kiefer-Teil (11, 31, 41), der mindestens ein längliches Element (11; 310, 311; 410, 411) aufweist, das dazu eingerichtet ist, sich gegenüber der jugale Fläche des Jochbeins des Patienten zu erstrecken, und von dem ein Ende mit dem Jochbein-Teil verbunden ist und von dem das andere Ende frei ist und mit einer Schnittstelle zur Verbindung mit einer Zahnprothese verbunden ist.

2. Implantat nach Anspruch 1, wobei der Jochbein-Teil (10; 30) aus einem Stück mit dem Kiefer-Teil (11; 31) gefertigt ist.

3. Implantat nach Anspruch 1, welches aus mindestens zwei unabhängigen Teilen gefertigt ist, wobei der Jochbein-Teil (40) mindestens ein Mittel zur Befestigung (406, 407) eines länglichen Elements (410, 411) definiert.

4. Implantat nach einem der Ansprüche 1 bis 3, wobei die Platte eine einzige Befestigungsöffnung umfasst.

5. Implantat nach Anspruch 4, welches auf seiner konvexen Innenfläche, die dazu bestimmt ist, sich mit der jugale Fläche des Jochbeins in Kontakt zu befinden, mindestens ein in Bezug auf die Innenfläche vorstehendes Relief umfasst.

6. Implantat nach einem der Ansprüche 1 bis 3, wobei die Platte (11, 31, 41) mindestens zwei Befestigungsöffnungen umfasst.

7. Implantat nach einem der Ansprüche 1 bis 6, wobei der Kiefer-Teil (31, 41) mindestens zwei längliche Elemente (310, 311; 410, 411) aufweist, wobei die länglichen Elemente miteinander einen spitzen Winkel bilden.

8. Implantat nach einem der Ansprüche 1 bis 7, wobei der Jochbein-Teil präoperativ vorgeformt ist, um der äußeren Form des Jochbeins des Patienten zu entsprechen.

9. Implantat nach einem der Ansprüche 1 bis 8, wobei das mindestens eine längliche Element präoperativ vorgeformt ist, um der Form und den Abmessungen der jugale Fläche des Kieferknochens des Patienten zu entsprechen.

10. Bausatz zur Herstellung eines zygomatischen Zahnimplantats (4), das dazu bestimmt ist, eine Zahnprothese aufzunehmen und nur auf der jugale Fläche des Jochbeins (21) eines Patienten befestigt zu werden, umfassend:
- einen Jochbein-Befestigungsteil (40), der dazu eingerichtet ist, auf der jugale Fläche des Jochbeins eines Patienten befestigt zu werden, und eine Platte bildet, in der mindestens eine Befestigungsöffnung (400, 401, 402) definiert ist, welche die Platte durchquert und welche dafür ausgelegt ist, ein Befestigungselement aufzunehmen, um die Platte auf der jugale Fläche des Jochbeins eines Patienten zu befestigen, wobei der Jochbein-Teil mindestens ein Mittel zur Befestigung (406, 407) eines länglichen Elements definiert, wobei das längliche Element lösbar befestigt werden kann, und
- mindestens ein längliches Element (410, 411), das dazu eingerichtet ist, sich gegenüber der jugale Fläche des Jochbeins des Patienten zu erstrecken, und von dem ein Ende dazu bestimmt ist, in einem Befestigungsmittel des Jochbein-Teils befestigt zu werden, und von dem das andere Ende frei ist und mit einer Schnittstelle zur Verbindung mit einer Zahnprothese verbunden ist.

11. Bausatz nach Anspruch 10, wobei der Jochbein-Teil präoperativ vorgeformt ist, um der äußeren Form des Jochbeins des Patienten zu entsprechen.

12. Bausatz nach Anspruch 10, wobei der Jochbein-Teil standardmäßig hergestellt ist.

13. Bausatz nach einem der Ansprüche 10 bis 12, wobei das mindestens eine längliche Element präoperativ vorgeformt ist, um der Form und den Abmessungen der jugale Fläche des Kieferknochens des Patienten zu entsprechen.

14. Bausatz nach einem der Ansprüche 10 bis 12, wobei das mindestens eine längliche Element standardmäßig hergestellt ist.

## Claims

1. Zygomatic dental implant (1, 3, 4) for supporting a dental prosthesis and for being fixed only to the jugal surface of the zygomatic bone (21) of a patient, this implant comprising:
- A zygomatic fixation part (10, 30, 40) arranged to be fixed to the jugal surface (210) of the zygomatic bone of a patient, forming a plate, in which there is defined at least one fixation opening (100, 101, 102; 300, 301, 302; 400, 401, 402) which extends through the plate and which is configured to receive a fixation element (103, 104, 105; 303, 304, 305) so as to fix the plate to the jugal surface of the zygomatic bone of a patient;
- A maxillary part (11, 31, 41) comprising at least one elongate element (11; 310, 311; 410, 411) arranged to extend facing the jugal surface of the maxillary bone of the patient, and one end of which is connected to the zygomatic part, and the other end of which is free and is connected to an interface for connection with a dental prosthesis.

2. Implant according to Claim 1, wherein the zygomatic part (10; 30) is formed integrally with the maxillary part (11; 31).

3. Implant according to Claim 1, made in at least two independent parts, wherein the zygomatic part (40) defines at least one fixation means (406, 407) for an elongate element (410, 411).

4. Implant according to one of Claims 1 to 3, wherein said plate comprises a single fixation opening.

5. Implant according to Claim 4, comprising, on its convex internal face intended to be in contact with the jugal surface of the zygomatic bone, at least one relief projecting with respect to said internal face.

6. Implant according to one of Claims 1 to 3, wherein said plate (11, 31, 41) comprises at least two fixation openings.

7. Implant according to one of Claims 1 to 6, wherein the maxillary part (31, 41) comprises at least two elongate elements (310, 311; 410, 411), said elongate elements forming an acute angle between them.

8. Implant according to one of Claims 1 to 7, wherein said zygomatic part is pre-formed pre-operatively in order to match the external shape of the zygomatic bone of the patient.

9. Implant according to one of Claims 1 to 8, wherein said at least one elongate element is pre-formed pre-operatively in order to match the shape and dimensions of the jugal surface of the maxillary bone of the patient.

10. Kit for producing a zygomatic dental implant (4) intended to receive a dental prosthesis and to be fixed only to the jugal surface of the zygomatic bone (21) of a patient, comprising:
- A zygomatic fixation part (40) arranged to be fixed to the jugal surface of the zygomatic bone of a patient, forming a plate in which there is defined at least one fixation opening (400, 401, 402) which extends through the plate and which is configured to receive a fixation element so as to fix the plate to the jugal surface of the zygomatic bone of a patient, the zygomatic part defining at least one fixation means (406, 407) for an elongate element, in which said elongate element can be fixed removably, and
- At least one elongate element (410, 411) arranged to extend facing the jugal surface of the maxillary bone of the patient, and one end of which is intended to be fixed in a fixation means of the zygomatic part, and the other end of which is free and is connected to an interface for connection with a dental prosthesis.

11. Kit according to Claim 10, wherein said zygomatic part is pre-formed pre-operatively in order to match the external shape of the zygomatic bone of the patient.

12. Kit according to Claim 10, wherein said zygomatic part is standard.

13. Kit according to one of Claims 10 to 12, wherein said at least one elongate element is pre-formed pre-operatively in order to match the shape and dimensions of the jugal surface of the maxillary bone of the patient.

14. Kit according to one of Claims 10 to 12, wherein said at least one elongate element is standard.
